# EUROPÄISCHE PATENTANMELDUNG

(11) **EP 4 427 572 A1**
(43) Veröffentlichungstag der Anmeldung: **11.09.2024**
(21) Anmeldenummer: 23217107.4
(22) Anmeldetag: 15.12.2023
(51) Int. Cl.: A01D 41/12, A01D 43/073, A01D 43/08

(54) **LANDWIRTSCHAFTLICHE ERNTEMASCHINE**

(30) Priorität: 07.03.2023 DE 102023105635
(71) Anmelder: CLAAS Saulgau GmbH, 88348 Bad Saulgau (DE)
(72) Erfinder: Löffler, Niklas, 88367 Hohentengen (DE); Deufel, Tobias, 88605 Meßkirch-Menningen (DE); Bauknecht, Benjamin, 88356 Ostrach (DE)
(74) Vertreter: Budach, Steffen

(57) **Zusammenfassung**

Landwirtschaftliche Erntemaschine, mit einer Überladevorrichtung (1), die ein erstes Teilstück (2) und ein um eine Schwenkachse (4) zum ersten Teilstück (2) schwenkbares zweites Teilstück (3) aufweist, wobei das zweite Teilstück (3) relativ zum ersten Teilstück (2) um die Schwenkachse (4) zwischen einer ausgeklappten Stellung, in der sich das zweite Teilstück (3) als Längenfortsetzung des ersten Teilstücks (2) erstreckt, und einer eingeklappten Stellung, in der das zweite Teilstück (3) längsseits neben dem ersten Teilstück (2) angeordnet ist, schwenkbar ist, mit einer eine erste Kolben-Zylinder-Einheit (4) aufweisende Antriebs-einrichtung zum Antreiben einer Schwenkbewegung des zweiten Teilstücks (3) relativ zum ersten Teilstück (2) zwischen der eingeklappten Stellung und der ausgeklappten Stellung, mit einer eine zweite Kolben-Zylinder-Einheit (11) aufweisende Verriegelungseinrichtung (10) zum Verriegeln des zweiten Teilstücks (3) am ersten Teilstück (2) in der ausgeklappten Stellung, wobei ein Kolben (12) der zweiten Kolben-Zylinder-Einheit (11) in einer die Verrieglung des zweiten Teilstücks (3) in der ausgeklappten Stellung bewirkenden Kolbenposition einen definierten Abstand von einem Zylinderboden eines Zylinders (13) der zweiten Kolben-Zylinder-Einheit (11) aufweist.

## Beschreibung

Die Erfindung betrifft eine landwirtschaftliche Erntemaschine.

Aus der DE 10 2014 115 503 A1 ist eine landwirtschaftliche Erntemaschine mit einer als Auswurfkrümmer ausgebildeten Überladevorrichtung bekannt, mithilfe derer von der landwirtschaftlichen Erntemaschine geerntetes Erntegut von der landwirtschaftlichen Erntemaschine in Richtung auf einen Transportwagen gefördert werden kann. Die Überladevorrichtung verfügt über ein erstes Teilstück und über ein um eine Schwenkachse zum ersten Teilstück schwenkbares zweites Teilstück. Das zweite Teilstück ist relativ zum ersten Teilstück um die Schwenkachse zwischen einer ausgeklappten Stellung und einer eingeklappten Stellung schwenkbar. In der ausgeklappten Stellung erstreckt sich das zweite Teilstück als Längsfortsetzung des ersten Teilstücks. In der eingeklappten Stellung ist das zweite Teilstück längsseits neben dem ersten Teilstück angeordnet. Eine Antriebseinrichtung, die eine erste Kolben-Zylinder-Einheit aufweist, dient dem Antreiben der Schwenkbewegung des zweiten Teilstücks relativ zum ersten Teilstück zwischen der eingeklappten Stellung und der ausgeklappten Stellung. Über eine Verriegelungseinrichtung kann das zweite Teilstück am ersten Teilstück in der ausgeklappten Stellung verriegelt werden, wobei die Verriegelungseinrichtung eine zweite Kolben-Zylinder-Einheit aufweist.

Bei aus der Praxis bekannten landwirtschaftlichen Erntemaschinen, deren Überladevorrichtung ein erstes Teilstück und ein zum ersten Teilstück schwenkbares zweites Teilstück aufweisen, kann es in der ausgeklappten Stellung des zweiten Teilstücks auch nach Verriegelung des zweiten Teilstücks am ersten Teilstück in der ausgeklappten Stellung zu einer unerwünschten Relativbewegung zwischen den beiden Teilstücken kommen. Dies kann zum Beispiel durch einen Verschleiß an einem Schwenkmechanismus, durch einen Verschleiß an der Verriegelungseinrichtung oder dergleichen verursacht werden. Hierdurch kann es zu Störungen im Erntegutstrom innerhalb der Überladevorrichtung kommen.

Hiervon ausgehend liegt der vorliegenden Erfindung die Aufgabe zugrunde, eine neuartige landwirtschaftliche Erntemaschine zu schaffen, die solche Störungen im Erntegutstrom innerhalb der Überladevorrichtung vermeidet.

Diese Aufgabe wird durch eine landwirtschaftliche Erntemaschine nach Patentanspruch 1 gelöst. Erfindungsgemäß weist ein Kolben der zweiten Kolben-Zylinder-Einheit in einer die Verrieglung des zweiten Teilstücks in der ausgeklappten Stellung bewirkenden Kolbenposition einen definierten Abstand von einem Zylinderboden eines Zylinders der zweiten Kolben-Zylinder-Einheit auf. Dadurch fährt der Kolben der zweiten Kolben-Zylinder-Einheit in der die Verrieglung des zweiten Teilstücks in der ausgeklappten Stellung bewirkenden Kolbenposition nicht auf Anschlag am Zylinder. Hierdurch ist es möglich, einen Verschleiß, zum Beispiel des Klappmechanismus oder der Verriegelungseinrichtung zu kompensieren und so stets eine sichere Verriegelung des zweiten Teilstücks am ersten Teilstück in der ausgeklappten Stellung zu gewährleisten, also eine unerwünschte Relativbewegung zwischen den beiden Teilstücken der Überladevorrichtung in der ausgeklappten und verriegelten Stellung des zweiten Teilstücks zu vermeiden. Hierdurch kann stets ein ungestörter Erntegutstrom durch die Überladevorrichtung gewährleistet werden.

Vorzugsweise ist die erste Kolben-Zylinder-Einheit an einer ersten Seite der Überladevorrichtung, an welcher die Schwenkachse ausgebildet ist, und die zweite Kolben-Zylinder-Einheit an einer gegenüberliegenden zweiten Seite der Überladevorrichtung angeordnet. Dies ist besonders bevorzugt, um in der ausgelappten Stellung des zweiten Teilstücks dasselbe zuverlässig am ersten Teilstück zu verriegeln. Für die Verriegelungsvorrichtung kann so bezogen auf die Schwenkachse ein großer Hebelarm genutzt werden.

Vorzugsweise weist die Verriegelungseinrichtung einen an der zweiten Seite der Überladevorrichtung angeordneten Verriegelungshebel auf, der mit dem Kolben der zweiten Kolben-Zylinder-Einheit derart zusammenwirkt, dass der Verriegelungshebel bei der Verriegelung des zweiten Teilstücks am ersten Teilstück die beiden Teilstücke, nämlich Endbereiche derselben, gegeneinanderdrückt. Hierbei wird das zweite Teilstück durch die Verriegelungseinrichtung an das erste Teilstück aktiv herangezogen. Auch dies dient der Bereitstellung einer vorteilhaften Verriegelung des zweiten Teilstücks am ersten Teilstück in der ausgeklappten Stellung des zweiten Teilstücks.

Vorzugsweise fährt der Kolben der ersten Kolben-Zylinder-Einheit zur Überführung des zweiten Teilstücks in die ausgeklappte Stellung aus dem Zylinder der ersten Kolben-Zylinder-Einheit aus, wobei der Kolben der zweiten Kolben-Zylinder-Einheit zum Verriegeln des zweiten Teilstücks am ersten Teilstück in der ausgeklappten Stellung in den Zylinder der zweiten Kolben-Zylinder-Einheit einfährt.

Das Ausfahren des Kolbens der ersten Kolben-Zylinder-Einheit zur Überführung des zweiten Teilstücks in die ausgeklappte Stellung und das Einfahren des Kolbens der zweiten Kolben-Zylinder-Einheit zum Verriegeln des zweiten Teilstücks am ersten Teilstück in der ausgeklappten Stellung wird vorzugsweise über eine Ablaufsteuerung geregelt. Hierzu wird vorzugsweise das Erreichen der ausgeklappten Stellung des zweiten Teilstücks mit einem Sensor erkannt und sodann anschließend zum Verriegeln der Kolben der zweiten Kolben-Zylinder-Einheit eingefahren. Dies ist besonders bevorzugt, um eine vorteilhafte Verriegelung des zweiten Teilstücks am ersten Teilstück in der ausgeklappten Stellung des zweiten Teilstücks zu gewährleisten.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Ausschnitt aus einer Überladevorrichtung einer erfindungsgemäßen landwirtschaftlichen Erntemaschine in einer Ansicht von einer ersten Seite der Überladevorrichtung;
- Fig. 2: einen Ausschnitt aus der Überladevorrichtung der erfindungsgemäßen landwirtschaftlichen Erntemaschine in einer Ansicht von einer zweiten Seite der Überladevorrichtung;
- Fig. 3: einen weiteren Ausschnitt aus der Überladevorrichtung der erfindungsgemäßen landwirtschaftlichen Erntemaschine in einer Ansicht von der zweiten Seite der Überladevorrichtung;
- Fig. 4: ein Hydraulikschema der Überladevorrichtung der erfindungsgemäßen landwirtschaftlichen Erntemaschine.

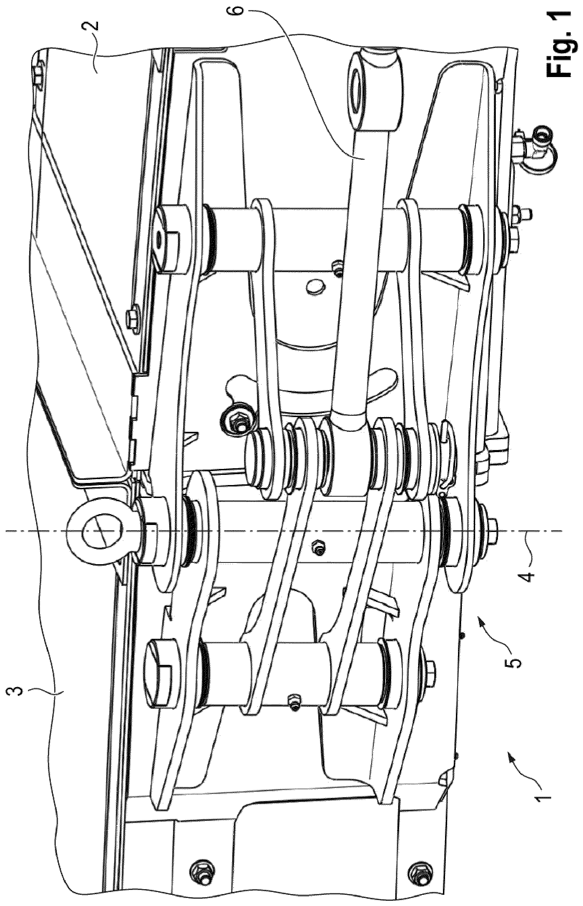

Fig. 1 bis 3 zeigen jeweils einen Ausschnitt aus einer als Auswurfkrümmer ausgebildeten Überladevorrichtung 1 einer landwirtschaftlichen Erntemaschine in unterschiedlichen Ansichten.

Mit Hilfe einer solchen Überladevorrichtung kann von der landwirtschaftlichen Erntemaschine geerntetes Erntegut von der landwirtschaftlichen Erntemaschine in Richtung auf einen Transportwagen gefördert werden.

Fig. 1 bis 3 zeigen ein erstes Teilstück 2 und ein zweites Teilstück 3 der Überladevorrichtung 1. Das erste Teilstück 2 greift mit einem ersten, nicht gezeigten Ende an einem Maschinengehäuse der Erntemaschine an. An einem gegenüberliegenden zweiten Ende des ersten Teilstücks 2 schließt sich das zweite Teilstück 3 der Überladevorrichtung an, welches um eine Schwenkachse 4 relativ zum ersten Teilstück 2 zwischen einer eingeklappten Stellung und einer ausgeklappten Stellung verlagert werden kann. In der ausgeklappten Stellung erstreckt sich das zweite Teilstück 3 als Längsfortsetzung des ersten Teilstücks 2. In der eingeklappten Stellung ist das zweite Teilstück 3 längsseits neben dem ersten Teilstück 2 angeordnet.

Die Schwenkachse 4, um welche das zweite Teilstück 3 relativ zum ersten Teilstück 2 zwischen der eingeklappten Stellung und der ausgeklappten Stellung verlagert werden kann, wird von einem Schwenkgelenk 5 bereitgestellt, welches an einer ersten Seite der Überladevorrichtung 1 im Bereich sich gegenüberliegender, bzw. aneinander angrenzender Enden der beiden Teilstücke 2, 3 der Überladevorrichtung 1 ausgebildet ist.

Fig. 1 zeigt eine Ansicht auf diese erste Seite der Überladevorrichtung 1, an welcher die die Schwenkachse 4 bereitstellende Schwenkgelenk 5 ausgebildet ist.

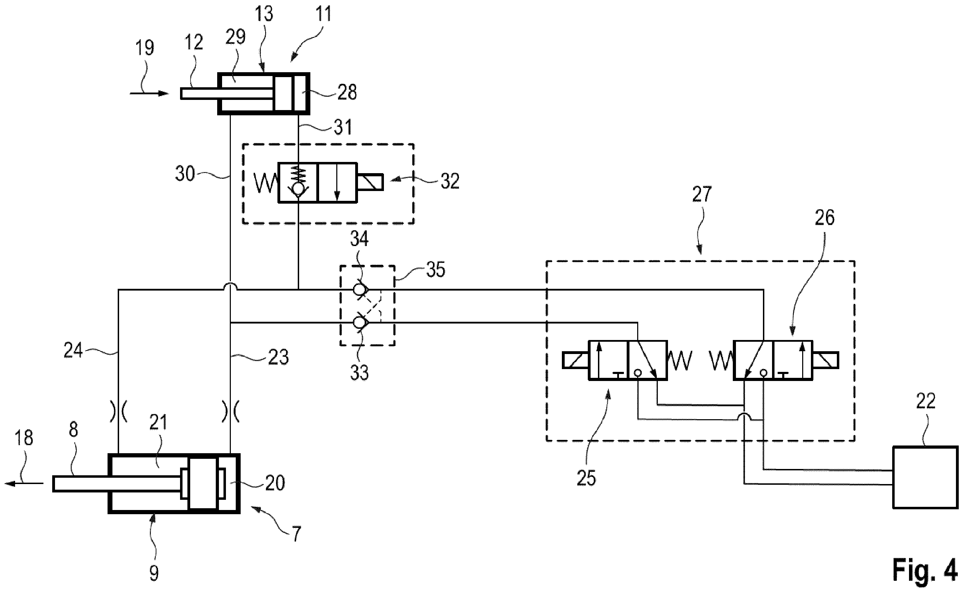

Über eine Koppelstange 6 ist das Schwenkgelenk 5 mit einer in Fig. 1 bis 3 nicht gezeigten Antriebseinrichtung zum Antreiben der Schwenkbewegung zwischen den beiden Teilstücken 2, 3 gekoppelt, wobei im Hydraulikschema der Fig. 4 eine Kolben-Zylinder-Einheit 7 dieser Antriebseinrichtung gezeigt ist. Die Kolben-Zylinder-Einheit 7 der Antriebseinrichtung, die dem Antreiben der Schwenkbewegung des zweiten Teilstücks 3 relativ zum ersten Teilstück 2 zwischen der eingeklappten Stellung und der ausgeklappten Stellung des zweiten Teilstücks 3 dient, stellt eine erste Kolben-Zylinder-Einheit der Überladevorrichtung 1 bereit, die einen Kolben 8 und einen Zylinder 9 aufweist. Der Kolben 8 der ersten Kolben-Zylinder-Einheit 7 der Antriebseinrichtung wirkt dabei mit der Koppelstange 6 der Fig. 1 zusammen.

Um dann, wenn das zweite Teilstück 3 der Überladevorrichtung 1 relativ zum ersten Teilstück 2 derselben in die ausgeklappte Stellung verlagert ist, das zweite Teilstück 3 in der ausgeklappten Stellung am ersten Teilstück 2 zu verriegeln, weist die Überladevorrichtung 1 weiterhin eine Verriegelungseinrichtung 10 auf.

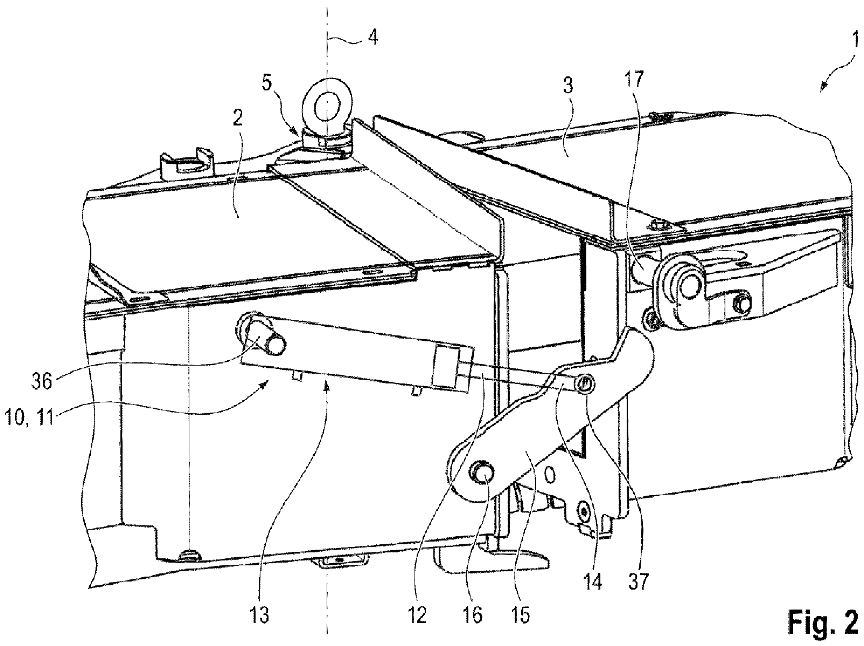

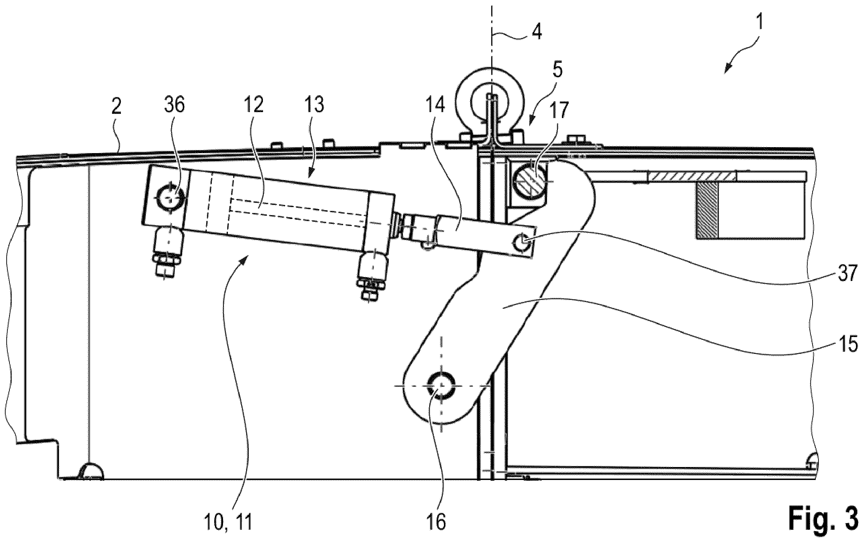

Die Verriegelungseinrichtung 10 ist im gezeigten Ausführungsbeispiel an einer der ersten Seite der Überladevorrichtung 1 gegenüberliegenden zweiten Seite der Überladevorrichtung 1 angeordnet, wobei diese zweite Seite der ersten Seite der Überladevorrichtung, an welcher die Schwenkachse 4 und das Schwenkgelenk 5 ausgebildet sind, gegenüberliegt. Fig. 2 und 3 zeigen jeweils eine Ansicht auf diese zweite Seite der Überladevorrichtung 1, an welcher die Verriegelungseinrichtung 10 ausgebildet ist.

Sollen die beiden Teilstücke 2, 3 relativ zueinander verschwenkt werden, so ist die Verriegelungseinrichtung 10 entriegelt und gibt die Relativbewegung des zweiten Teilstücks 3 relativ zum ersten Teilstück 2 frei. Ist hingegen das zweite Teilstück 3 in die ausgeklappte Stellung überführt, in welcher sich das zweite Teilstück 3 als Längsfortsetzung des ersten Teilstücks 2 erstreckt, so ist zur Verriegelung des zweiten Teilstücks 3 in der ausgeklappten Stellung die Verriegelungseinrichtung 10 verriegelt.

Die Verriegelungseinrichtung 10 weist eine Kolben-Zylinder-Einheit 11 auf, die eine zweite Kolben-Zylinder-Einheit der Überladevorrichtung 1 bereitstellt. Dieselbe verfügt über einen Kolben 12 und einen Zylinder 13. Diese zweite Kolben-Zylinder-Einheit 11 ist sowohl in Fig. 2 und 3 als auch im Hydraulikschema der Fig. 4 gezeigt. Fig. 2 zeigt die Verriegelungseinrichtung 10 in einem entriegelten Zustand, in welchem dieselbe eine Schwenkbewegung des zweiten Teilstücks 3 relativ zum ersten Teilstück 2 freigibt. Fig. 3 zeigt die Verriegelungseinrichtung 10 in einem verriegelten Zustand, in welchem dieselbe das zweite Teilstück 3 in der ausgeklappten Stellung am ersten Teilstück 2 verriegelt.

Mit dem Kolben 12 der zweiten Kolben-Zylinder-Einheit11 wirkt vorzugsweise eine Koppelstange 14 zusammen, die an einem Verriegelungshebel 15 der Verriegelungseinrichtung 10 angreift. Der Verriegelungshebel 15 ist an einem ersten Ende um eine Schwenkgelenk 16 schwenkbar am ersten Teilstück 2 befestigt. Auch der Zylinder 13 der zweite Kolben-Zylinder-Einheit 11 ist um eine Schwenkgelenk 36 schwenkbar am ersten Teilstück 2 befestigt. Ein weiteres Schwenkgelenk 37 ist zwischen der Koppelstange 14 und dem Verriegelungshebel 15 ausgebildet.

Durch Verlagern der Koppelstange 14 bzw. des mit der Koppelstange 14 zusammenwirkenden Kolbens 12 der zweiten Kolben-Zylinder-Einheit 11 kann der Verriegelungshebel 15 um das Schwenkgelenk 16 verlagert werden. Zum Verriegeln des zweiten Teilstücks 3 am ersten Teilstück 2 umgreift ein zweites Ende des Verriegelungshebels 15 einen Verriegelungsbolzen 17, der am zweiten Teilstück 3 ausgebildet ist. Wie Fig. 2 entnommen werden kann, ist dann, wenn die Verriegelungseinrichtung 10 entriegelt ist, der Verriegelungshebel 15 im Vergleich zur Fig. 3 nach unten geschwenkt, sodass das zweite Ende des Verriegelungshebels 15 den Verriegelungsbolzen 17 freigibt.

Dann, wenn der Kolben 12 der zweiten Kolben-Zylinder-Einheit 11 eine die Verriegelung des zweiten Teilstücks 3 in der ausgeklappten Stellung desselben bewirkende Kolbenposition einnimmt (siehe Fig. 3), weist der Kolben einen definierten Abstand zu einem Zylinderboden des Zylinders 13 der zweiten Kolben-Zylinder-Einheit 11 auf.

In der die Verriegelung des zweiten Teilstücks 3 in der ausgeklappten Stellung bewirkenden Kolbenposition des Kolben 12 der zweiten Kolben-Zylinder-Einheit 11 fährt der Kolben 12 demnach nicht auf Anschlag am Zylinder 2 bzw. Zylinderboden des Zylinders 12 der zweiten Kolben-Zylinder-Einheit 11. Hierdurch ist es möglich, einen Verschleiß im Bereich zum Beispiel der Verriegelungseinrichtung 10 oder auch des Schwenkgelenks 5 zu kompensieren und so stets für eine sichere Verriegelung des zweiten Teilstücks 3 in der ausgeklappten Stellung am ersten Teilstück 2 gewährleistet werden, die eine unerwünschte Relativbewegung zwischen den beiden Teilstücken 2, 3 verhindert.

Wie bereits ausgeführt, ist die erste Kolben-Zylinder-Einheit 7, welche mit dem Schwenkgelenk 5 zusammenwirkt, an einer gegenüberliegenden Seite der Überladevorrichtung 1 positioniert wie die zweite Kolben-Zylinder-Einheit 11, die Bestandteil der Verriegelungseinrichtung 10 ist. Hierdurch werden in der Verriegelungsposition günstige Hebelverhältnisse zum Verriegeln der beiden Teilstücke 2, 3 gewährleistet. Der Verriegelungshebel 15 bewirkt, dass bei der Verriegelung der beiden Teilstücke 2, 3 die sich gegenüberliegenden bzw. aneinander angrenzenden Endbereiche derselben gegeneinandergedrückt werden.

Der Kolben 8 der ersten Kolben-Zylinder-Einheit 7 wird zur Überführung des zweiten Teilstücks 3 in die ausgeklappte Stellung aus dem Zylinder 9 der ersten Kolben-Zylinder-Einheit 7 ausgefahren. Diese Ausfahrrichtung ist in Fig. 4 durch einen Pfeil 18 visualisiert. Daraus folgt, dass der Kolben 8 der ersten Kolben-Zylinder-Einheit 7 zur Überführung des zweiten Teilstücks 3 in die eingeklappte Stellung in den Zylinder 9 entgegen der durch den Pfeil 18 visualisierten Richtung eingefahren wird.

Der Kolben 12 zweiten Kolben-Zylinder-Einheit 11 wird zum Verriegeln des zweiten Teilstücks 3 am ersten Teilstück 2 in der ausgeklappten Stellung in den Zylinder 13 der zweiten Kolben-Zylinder-Einheit 11 eingefahren, wobei in Fig. 4 ein Pfeil 19 diese Einfahrrichtung visualisiert. Daraus folgt, dass zum Entriegeln des zweiten Teilstücks 3 der Kolben 12 der zweiten Kolben-Zylinder-Einheit 11 aus dem Zylinder 13 derselben entgegen der durch den Pfeil 19 visualisierten Richtung ausgefahren wird.

Wie am besten Fig. 4 entnommen werden kann, sind sowohl die erste Kolben-Zylinder-Einheit 7 als auch die zweite Kolben-Zylinder-Einheit 11 doppeltwirkend. Eine erste Hydraulikkammer 20 des Zylinders 9 der ersten Kolben-Zylinder-Einheit 7 sowie eine zweite Hydraulikkammer 21 des Zylinders 9 der ersten Kolben-Zylinder-Einheit 7 sind über jeweils eine Hydraulikleitung 23, 24 und eine zwei Schaltventile 25, 26 aufweisende Schaltventileinheit 27 an ein Hydraulikreservoir 22 gekoppelt. Soll der Kolben 8 der ersten Kolben-Zylinder-Einheit 7 in Richtung des Pfeils 18 aus dem Zylinder 9 ausgefahren werden, so wird ausgehend vom Hydraulikreservoir 22 in die Hydraulikkammer 20 Hydrauliköl eingefüllt und aus der Hydraulikkammer 21 Hydrauliköl abgeführt. Die Schaltventile 25, 26 nehmen dann hierzu entsprechende Schaltstellungen ein. Soll der Kolben 8 der ersten Kolben-Zylinder-Einheit 7 in den Zylinder 9 eingefahren werden, so wird der Hydraulickammer 21 Hydrauliköl zugeführt und von der Hydraulikkammer 20 Hydrauliköl abgeführt, wobei hierzu dann wiederum die Schaltventile 25, 26 entsprechende Schaltstellungen einnehmen. Dann, wenn durch Ausfahren des Kolbens 8 aus dem Zylinder 9 der ersten Kolben-Zylinder-Einheit 7 das zweite Teilstück 3 relativ zum ersten Teilstück 2 in die ausgeklappte Stellung überführt wurde und dies insbesondere mithilfe eines Sensors erkannt wurde, erfolgt nachfolgend die Verriegelung des Teilstücks 3 am ersten Teilstück 2 mithilfe der Verriegelungseinrichtung 10, wobei hierzu der Kolben 12 der zweiten Kolben-Zylinder-Einheit 11 in den Zylinder 13 derselben eingefahren wird.

Gemäß Fig. 4 ist auch die zweite Kolben-Zylinder-Einheit 11 doppeltwirkend, wobei Hydraulikkammern 28, 29 des Zylinders 13 der zweiten Kolben-Zylinder-Einheit 11 mit den Hydraulikleitungen 23, 24 über weitere Hydraulikleitungen 30, 31 und ein weiteres Schaltventil 32 gekoppelt sind. So ist die Hydraulikkammer 29 des Zylinders 13 der zweiten Kolben-Zylinder-Einheit 11, die zum Einfahren des Kolbens 12 derselben und damit zum Verriegeln der Verriegelungseinrichtung 10 mit Hydrauliköl befüllt wird, über die Hydraulikleitung 30 an die Hydraulikleitung 23 gekoppelt, über die der Hydraulikkammer 20 des Zylinders 9 der ersten Kolben-Zylinder-Einheit 7 zum Ausfahren des Kolbens 8 aus dem Zylinder 9 bei der Überführung des zweiten Teilstücks 3 in die ausgeklappte Stellung Hydrauliköl zugeführt wird.

Die andere Hydraulikkammer 28 des Zylinders 13 der zweiten Kolben-Zylinder-Einheit 11, aus welcher beim Verriegeln der Verriegelungseinrichtung Hydrauliköl abgeführt wird, ist unter Zwischenschaltung des Schaltventils 32 an die Hydraulikleitung 24 gekoppelt, die ihrerseits an die Hydraulikkammer 21 des Zylinders 9 der ersten Kolben-Zylinder-Einheit 7 angeschlossen ist.

Wurde mithilfe eines Sensors erkannt, dass der Kolben 8 aus dem Zylinder 9 der ersten Kolben-Zylinder-Einheit 7 ausgefahren bzw. das zweite Teilstück 3 in die ausgeklappte Stellung überführt ist, so kann nachfolgend das Schaltventil 32 geschaltet und der Kolben 12 der zweiten Kolben-Zylinder-Einheit 11 eingefahren werden, um die Verriegelungseinrichtung 10 zu verriegeln und so das zweite Teilstück 3 am ersten Teilstück 2 der Überladevorrichtung 1 zu verriegeln.

Gemäß Fig. 4 sind in die Hydraulikleitungen 23 und 24 zwischen den Schaltventilen 25 und 26 und den Abzweigstellen der Hydraulikleitungen 30, 31 Rückschlagventile 33, 34 einer Ventileinheit 35 geschaltet, wobei die Rückschlagventile 33, 34 derart miteinander verschaltete sind, dass immer nur eines dieser Rückschlagventile 33, 34 den Durchfluss in Sperrrichtung des jeweiligen Rückschlagventils 33, 34 sperrt.

### Bezugszeichenliste

| | | | |
|---|---|---|---|
| 1 | Überladevorrichtung | 37 | Schwenkgelenk |
| 2 | erstes Teilstück | | |
| 3 | zweites Teilstück | | |
| 4 | Schwenkachse | | |
| 5 | Schwenkgelenk | | |
| 6 | Koppelstange | | |
| 7 | erste Kolben-Zylinder-Einheit | | |
| 8 | Kolben | | |
| 9 | Zylinder | | |
| 10 | Verriegelungseinrichtung | | |
| 11 | zweite Kolben-Zylinder-Einheit | | |
| 12 | Kolben | | |
| 13 | Zylinder | | |
| 14 | Koppelstange | | |
| 15 | Verriegelungshebel | | |
| 16 | Schwenkgelenk | | |
| 17 | Verriegelungsbolzen | | |
| 18 | Auffahrrichtung | | |
| 19 | Einfahrrichtung | | |
| 20 | Hydraulikkammer | | |
| 21 | Hydraulikkammer | | |
| 22 | Hydraulikreservoir | | |
| 23 | Hydraulikleitung | | |
| 24 | Hydraulikleitung | | |
| 25 | Schaltventil | | |
| 26 | Schaltventil | | |
| 27 | Ventileinheit | | |
| 28 | Hydraulikkammer | | |
| 29 | Hydraulikkammer | | |
| 30 | Hydraulikleitung | | |
| 31 | Hydraulikleitung | | |
| 32 | Schaltventil | | |
| 33 | Rückschlagventil | | |
| 34 | Rückschlagventil | | |
| 35 | Ventileinheit | | |
| 36 | Schwenkgelenk | | |

## Patentansprüche

1. Landwirtschaftliche Erntemaschine,
mit einer Überladevorrichtung (1), die ein erstes Teilstück (2) und ein um eine Schwenkachse (4) zum ersten Teilstück (2) schwenkbares zweites Teilstück (3) aufweist, wobei das zweite Teilstück (3) relativ zum ersten Teilstück (2) um die Schwenkachse (4) zwischen einer ausgeklappten Stellung, in der sich das zweite Teilstück (3) als Längenfortsetzung des ersten Teilstücks (2) erstreckt, und einer eingeklappten Stellung, in der das zweite Teilstück (3) längsseits neben dem ersten Teilstück (2) angeordnet ist, schwenkbar ist
mit einer eine erste Kolben-Zylinder-Einheit (4) aufweisende Antriebseinrichtung zum Antreiben einer Schwenkbewegung des zweiten Teilstücks (3) relativ zum ersten Teilstück (2) zwischen der eingeklappten Stellung und der ausgeklappten Stellung,
mit einer eine zweite Kolben-Zylinder-Einheit (11) aufweisende Verriegelungseinrichtung (10) zum Verriegeln des zweiten Teilstücks (3) am ersten Teilstück (2) in der ausgeklappten Stellung, **dadurch gekennzeichnet, dass**
ein Kolben (12) der zweiten Kolben-Zylinder-Einheit (11) in einer die Verrieglung des zweiten Teilstücks (3) in der ausgeklappten Stellung bewirkenden Kolbenposition einen definierten Abstand von einem Zylinderboden eines Zylinders (13) der zweiten Kolben-Zylinder-Einheit (11) aufweist.

2. Landwirtschaftliche Erntemaschine nach Anspruch 1, **dadurch gekennzeichnet, dass**
der Kolben (12) der zweiten Kolben-Zylinder-Einheit (11) in der die Verrieglung des zweiten Teilstücks (3) in der ausgeklappten Stellung bewirkenden Kolbenposition nicht auf Anschlag am Zylinder (13) derselben fährt.

3. Landwirtschaftliche Erntemaschine nach Anspruch 1 oder 2, **dadurch gekennzeichnet, dass**
die erste Kolben-Zylinder-Einheit (7) an einer ersten Seite der Überladevorrichtung (1), an welcher die Schwenkachse (4) ausgebildet ist, und die zweite Kolben-Zylinder-Einheit (11) an einer gegenüberliegenden zweiten Seite der Überladevorrichtung (1) angeordnet ist.

4. Landwirtschaftliche Erntemaschine nach Anspruch 3, **dadurch gekennzeichnet, dass**
die Verriegelungseinrichtung (10) einen an der zweiten Seite der Überladevorrichtung (1) angeordneten Verriegelungshebel (15) aufweist, der mit dem Kolben (12) der zweiten Kolben-Zylinder-Einheit (11) derart zusammenwirkt, dass der Verriegelungshebel (15) bei der Verriegelung des zweiten Teilstücks (3) am ersten Teilstück (2) die beiden Teilstücke (2, 3), nämlich Endbereiche derselben, gegeneinander drückt.

5. Landwirtschaftliche Erntemaschine nach einem der Ansprüche 1 bis 4, **dadurch gekennzeichnet, dass**
der Kolben (8) der ersten Kolben-Zylinder-Einheit (7) zur Überführung des zweiten Teilstücks (3) in die ausgeklappte Stellung aus dem Zylinder (9) der ersten Kolben-Zylinder-Einheit (7) ausfährt,
der Kolben (12) der zweiten Kolben-Zylinder-Einheit (11) zum Verriegeln des zweiten Teilstücks (3) in der ausgeklappten Stellung in den Zylinder (13) der zweiten Kolben-Zylinder-Einheit (11) einfährt.

6. Landwirtschaftliche Erntemaschine nach Anspruch 5, **dadurch gekennzeichnet, dass**
der Kolben (8) der ersten Kolben-Zylinder-Einheit (7) zur Überführung des zweiten Teilstücks (3) in die eingeklappte Stellung in den Zylinder (9) der ersten Kolben-Zylinder-Einheit (7) einfährt,
der Kolben (12) der ersten Kolben-Zylinder-Einheit (11) zum Entriegeln des zweiten Teilstücks (3) aus dem Zylinder (13) der zweiten Kolben-Zylinder-Einheit (11) ausfährt.

7. Landwirtschaftliche Erntemaschine (100) nach Anspruch 5 oder 6, **dadurch gekennzeichnet, dass**
die erste Kolben-Zylinder-Einheit (7) doppeltwirkend ist,
eine erste und zweite Hydraulikkammer (20, 21) des Zylinders (9) der ersten Kolben-Zylinder-Einheit (7) über erste und zweite Hydraulikleitungen (23, 24) und erste und zweite Schaltventile (25, 26) an eine Hydraulikreservoir (22) koppelbar sind.

8. Landwirtschaftliche Erntemaschine (100) nach Anspruch 7, **dadurch gekennzeichnet, dass**
die zweite Kolben-Zylinder-Einheit (11) doppeltwirkend ist,
eine Hydraulikammer (29) des Zylinders (13) der zweiten Kolben-Zylinder-Einheit (11) über eine Hydraulikleitung (30) an die erste Hydraulikleitung (23) gekoppelt ist,
eine weitere Hydraulikkammer (28) des Zylinders (13) der zweiten Kolben-Zylinder-Einheit (11) über eine weitere Hydraulikleitung (31) und ein Schaltventil (32) an die zweite Hydraulikleitung (24) gekoppelt ist.
